# EUROPÄISCHE PATENTANMELDUNG

(11) **EP 1 868 061 A1**
(43) Veröffentlichungstag der Anmeldung: **19.12.2007**
(21) Anmeldenummer: 07450108.1
(22) Anmeldetag: 14.06.2007
(51) Int. Cl.: G06F 1/16, G09F 3/10

(54) **Bildschirmeinheit mit bedruckter Rückwand**

(30) Priorität: 14.06.2006 AT 4692006 U
(71) Anmelder: Hajek, Werner, 3270 Scheibbs (AT)
(72) Erfinder: Hajek, Werner, 3270 Scheibbs (AT)
(74) Vertreter: Sonn & Partner Patentanwälte

(57) **Zusammenfassung**

Die vorliegende Erfindung liefert eine Bildschirmeinheit, an dessen Gehäuse-Rückwand eine bedruckbare Folie mit einer Dicke zwischen 10 µm und 500 µm flächendeckend befestigt ist, wobei in mindestens einer Dimension der Aufsicht der Rückwand die Folie jeweils bei einem Abstand von weniger als 1 cm zu den beiden Rändern der Rückwand in dieser Dimension. Diese Folie stellt eine einzigartige Werbefläche dar.

## Beschreibung

Die vorliegende Erfindung betrifft die Anbringung von bedruckten Werbeflächen an Zielobjekten.

Bekannt sind bedruckbare Materialien, wie Folien oder Laminate, die an diversen Objekten, wie z.B. Kraftfahrzeugen, zu Werbezwecken angebracht werden können. Diese Werbeflächen sind dabei an stationären Trägern angebracht. Gegebenenfalls können bei der Wahl von flexiblen Materialien auch unebene Träger "bedruckt" werden.

Ein Ziel der vorliegenden Erfindung ist es, weitere Anwendungsmöglichkeiten zu Werbezwecken zu finden und technisch zu realisieren.

Die vorliegende Erfindung stellt vorrangig eine Bildschirmeinheit, an dessen Gehäuse-Rückwand eine bedruckbare Folie mit einer Dicke zwischen 10 µm und 500 µm flächendeckend, wobei in mindestens einer Dimension der Aufsicht der Rückwand die Folie jeweils bei einem Abstand von weniger als 1 cm, bevorzugt weniger als 0,5 cm, zu den beiden Rändern der Rückwand in dieser Dimension reichend, befestigt ist. Ebenso betrifft die Erfindung eine Folie zur Anbringung an der Rückwand eines Gehäuses einer Bildschirmeinheit, dadurch gekennzeichnet, dass die Folie eine Dicke von 10 µm und 500 µm aufweist und flächendeckend mindestens einer Dimension der Aufsicht der Rückwand des Gehäuses jeweils bei einem Abstand von weniger als 1 cm zu den beiden Rändern der Rückwand des Gehäuses in dieser Dimension befestigt ist. Selbstverständlich kann die Folie beliebig und wie gewünscht mit bestimmten Werbemustern oder Werbetexten bedruckt werden, beispielsweise durch handelsübliche Tintenstrahldrucker.

Unter Dimension der Aufsicht der Rückwand wird die Länge oder die Höhe der Rückwand verstanden. Als Rand wird die Begrenzung der Rückwand in ihrer Aufsicht verstanden. Vorzugsweise reicht die Folie bis zum Rand oder geht vor ihrer Umfaltung um die Ränder darüber hinaus. Vorzugsweise reicht die Folie auch in ihrer 2. Dimension (die andere Dimension ausgewählt aus Länge oder Höhe) bis zu einem Abstand von weniger als 1 cm, bevorzugt weniger als 0,5 cm, zu den beiden Rändern in der 2. Dimension der Rückwand - also, sodass die Folie in beiden Dimensionen der Aufsicht der Rückwand die Folie jeweils bei einem Abstand von weniger als 1 cm zu den vier Rändern der Rückwand befestigt ist.

Es wurde erfindungsgemäß gefunden, dass die Dicke der bedruckten Folie ein wesentlicher Faktor zur Ausführung ist. Bei zu großer Dicke, nämlich über 500 µm, eignen sich die Materialien hauptsächlich für großflächige Werbeplakate, aber nicht für die Anbringung an unebenen Gegenständen, bei denen eine höhere Flexibilität des Materials gefragt ist. Insbesondere wenn sich das Material an Kurven und Kanten anpassen muss, sind Materialien ab 500 µm Dicke ungeeignet. Bei zu dünnen Materialien (< 10 µm) wird das Abbildungsvermögen beeinträchtigt, da die Materialien eine geringe Farbaufnahmekapazität haben. Durch diese Limitationen ist die Anwendbarkeit von bedruckbaren und leicht anbringbaren Werbefolien stark eingeschränkt. Speziell bevorzugte Dicken der Folie sind bis zu 250 µm, vorzugsweise zwischen 30 µm und 200 µm, vorzugsweise zwischen 40 µm und 150 µm, am meisten bevorzugt zwischen 50 µm und 100 µm. Bevorzugt beziehen sich diese Dickeangaben auf Folien mit glatter Oberfläche. Erfindungsgemäß kann somit flächendeckend - also von einer Seitenkante zu einer gegenüberliegenden Kante der Fläche (die auch gekrümmt, gebogen oder durchlocht sein kann)- auf der Rückwand des Gehäuses einer Bildschirmeinheit eine Folie zur Verfügung gestellt werden - bzw. sogar über die Rückwand hinaus durch Faltung der Folie. Die Rückwand kann auch Belüftungsschlitze oder -löcher enthalten, wobei vorzugsweise die Folie ebenfalls mit entsprechenden Löchern vorgesehen ist, um die Belüftung nicht zu beeinträchtigen.

Unter "flächendeckend" ist eine Abdeckung der Fläche der Rückwand zumindest in einer Dimension der Fläche (in ihrer zweidimensionalen Aufsicht) zu verstehen, d.h. die Folie reicht von einer Seitenkante zur gegenüberliegenden Seitenkante. Insbesondere wird bevorzugt auch die andere Dimension der Fläche von Kante zu Kante abgedeckt. Selbstverständlich können einzelne Teile von der Folie frei gelassen werden, z.B. Lüftungsschlitze, Bildschirmhalterungen oder -gelenke oder ein Kabeleinlass. In besonderen Fällen kann ein bis 1 cm oder 0,5 cm breiter Streifen der Fläche der Rückwand frei von der Folie bleiben. Bevorzugt werden mehr als 70 %, bevorzugt mehr als 80 %, besonders bevorzugt mehr als 90 %, am meisten bevorzugt mehr als 95 %, insbesondere mehr als 99 % der Aufsichtsfläche der Rückwand durch die Folie abgedeckt.

Unter "Bildschirmeinheit" werden handelsübliche PC-Bildschirme, Monitore oder Bildschirmteile von Laptops oder Notebooks verstanden.

Am besten sind zur Beschichtung mit der Folie Flachbildschirme geeignet, insbesondere Rückseiten von Laptops oder Laptop-Bildschirme. Weitere Bildschirmeinheiten sind z.B. Notebooks, iPods, Handys, PDAs, Navigationssystemen.

Bevorzugte Folienmaterialien sind Kunststofffolien, im Speziellen thermoplastische Kunststoffe - bevorzugt auf Vinyl-Basis, vorzugsweise PVC-Basis. Solche Folien sind handelsüblich erhältlich, beispielsweise unter den Handelsbezeichnungen Scotchprint^{™}, Scotchcal^{™}, Electrocut^{™} oder Micro Comply^{™}. Besonders bevorzugt ist eine Laminatfolie bestehend aus einem 50 µm PVC-Film, einem drucksensitiven permanenten Acrylhaftmittel, und einer Lage doppelseitigem PE beschichtetem Kraft-Papier. Bevorzugt ist die bedruckbare Folie mit der Rückwand klebend, insbesondere heißklebend, z.B. durch Anschmelzen einer Laminatschicht der Folie, verbunden, z.B. kann die Folie durch Wärmeeinwirkung thermoplastisch formbar und klebend gemacht werden und wird in diesem Zustand an der Rückwand befestigt. Weitere Folien sind beispielsweise in der US 6,045,920 offenbart.

Die bedruckbare Folie wird vorzugsweise durch eine Schutzfolie überdeckt. Diese Schutzfolie ist durchsichtig, also im sichtbaren Lichtbereich transparent, bietet aber vorzugsweise Schutz vor UV-Einwirkung, Abrieb oder Kratzern.

Die bedruckbare Folie oder die Schutzfolie erstreckt sich vorzugsweise über die gesamte Fläche (zumindest in einer Dimension der Fläche) der Rückwand und deckt zudem die (Rund-)Kanten der Rückseite ab und ist dadurch zumindest teilweise gebogen. Durch die gezielte Auswahl an einsetzbaren Folien kann leicht eine solche Ausdehnung der Folie verwendet werden.

Die Enden der bedruckbaren Folie oder der Schutzfolie können in Spalten der Bildschirmeinheit versenkt werden, vorzugsweise in Spalten, die durch eine abnehmbare Rückwand und das übrige Gehäuse der Bildschirmeinheit gebildet werden. Dadurch entsteht ein besonders ausgezeichneter Halt der Folie an der Rückwand der Bildschirmeinheit, durch die verhindert wird, dass sich die Enden der Folie durch häufiges Anstreifen, z.B. durch die Hände eines Benutzers, aufstellen, was zur Ablösung der Folie führen würde.

In speziellen Ausführungsformen kann die bedruckbare Folie eine durchsichtige Folie sein. Unter dieser Folie können dann auch zwischen der Rückwand und der bedruckbaren Folie eine nicht-durchsichtige Folie und gegebenenfalls ein oder mehrere durchsichtige Folien befestigt werden. Dies ermöglicht besonders spezielle Lichteffekte, wenn z.B. die gedruckten Werbemuster auf der Folie mit einem gewissen Abstand (bedingt durch die zusätzlichen durchsichtigen Folien) vor dem Hintergrund abgebildet werden - z.B. spezielle 3D-Effekte sowie Licht- und Schatteneffekte.

Bevorzugterweise ist die bedruckbare Folie eine Linsenrasterfolie oder wird von einer Linsenrasterfolie zumindest teilweise überdeckt. Linsenrasterfolien (auch Lenticularfolien bezeichnet) verfügen über eng aneinander gereihte gleichartige Linsenstreifen (Sammellinse, z.B. von Zylinderlinsen). Bilder (Bildvorlagen) werden am PC streifenweise zerlegt und ergebnisabhängig mit speziellen Programmen zusammengeführt (interlaced). Je nach Wirkung befinden sich 2 bis 32 Teilbilder/Streifen unter einem Linsenstreifen. Mit der Lenticulartechnologie können 3D-Effekte, sogenannte Wackelbilder, und andere optische Effekte je nach Betrachtungswinkel erstellt werden. Die Lenticularfolie kann einerseits selbst bedruckt werden oder über ein gedrucktes Bild aufgebracht werden.

Vorzugsweise weist die Linsenrasterfolie eine Linsenanzahl von 5 bis 180 lpi, vorzugsweise von 15 bis 120 lpi, am meisten bevorzugt von 25 bis 90 lpi, auf. Die 1pi-Zahl hat auch einen Einfluss auf die Dicke. So sind Foliendicken bis zu 500 µm bei Lenticularfolien bevorzugt, für glatte Folien - also keine Lentikularfolien - sind Dicken bis zu 250 µm für eine optimale Anpassung an die beklebte Oberfläche bevorzugt.

In einer weiteren Ausführungsform wird in oder an einer der Folien ein Mikrochip befestigt. Mit Hilfe eines Mikrochips ist die Ortung des Chips zwecks Diebstahlschutz oder Wiederauffinden nach einem Diebstahl, z.B. über Satellitenortung, möglich.

In einer anderen Ausführungsform liegt das Linsenraster in einer Dimension, vorzugsweise vertikal oder horizontal zur Standfläche der Bildschirmeinheit vor.

In einem weiteren Aspekt sieht die vorliegende Erfindung ein Verfahren zur Befestigung einer bedruckbaren Folie an der Rückwand eines Gehäuses einer Bildschirmeinheit vor, wobei die bedruckbare Folie eine Dicke zwischen 10 µm und 500 µm aufweist und flächendeckend befestigt wird, wobei in mindestens einer Dimension der Aufsicht der Rückwand die Folie jeweils bei einem Abstand von weniger als 1 cm zu den beiden Rändern der Rückwand in dieser Dimension klebend, insbesondere heißklebend, angebracht wird. Eine selbstklebende Folie kann dabei mittels üblicher Mittel, z.B. einer Handwalze, Luftblasen-frei bei Raumtemperatur aufgebracht werden. Soll die Folie dabei verformt werden und sich der Gestalt der Rückwand anpassen, so kann die Folie erhitzt werden, um thermoplastisch verformbar zu werden. Dies kann z.B. in einem handelsüblichen Vakuumiergerät (z.B. welche herkömmlich für Folienverpackungen verwendet werden) bei oder über der Glasübergangstemperatur Tg (und unter dem Schmelzpunkt Tₘ) der Folie durchgeführt werden.

Besonders gut eignen sich Folien, insbesondere auf PVC-Basis, mit einer Dicke zwischen 20 µm und 200 µm, vorzugsweise zwischen 30 µm und 150 µm, am meisten bevorzugt zwischen 50 µm und 100 µm.

Um die bedruckbare Folie gegenüber Umgebungseinflüssen zu schützen, kann eine Schutzfolie über sie gespannt werden.

Bevorzugt ist die Rückwand der Bildschirmeinheit abnehmbar, und die bedruckbare Folie und/oder die Schutzfolie wird über die Kanten der Rückwand so weitgehend geformt (bzw. in ausreichender Größe vorgesehen und angebracht), dass beim Wiederbefestigen der Rückwand an der Bildschirmeinheit sich zumindest teilweise die Enden der bedruckbaren Folie oder der Schutzfolie in der Fuge zwischen der Rückwand und dem übrigen Gehäuse befinden.

Das erfindungsgemäße Verfahren kann in einem bestimmten Aspekt dazu verwendet werden, um einen Werbetext oder ein Werbemuster auf der Folie an eine Rückwand einer Bildschirmeinheit anzubringen.

In einem weiteren Aspekt stellt die vorliegende Erfindung die Verwendung einer hierin beschriebenen Folie zur Aufbringung eines Werbetextes oder Werbemusters an eine Rückwand einer Bildschirmeinheit, wie hierin definiert, dar.

Die vorliegende Erfindung wird weiters durch die folgenden Ausführungsbeispiele illustriert, ohne jedoch darauf beschränkt zu sein.

### Beispiel 1: Druck

Ein auf einem PC entworfenes Motiv wurde mit einem Tintenstrahldrucker (Fabrikdrucker) auf eine 41 cm x 27,5 cm große 3M^{®}-100 Micro Comply Folie (weich-PVC-Hochleistungsfolie, mit permanentem, transparentem Kleber) mit einer Stärke von 70 µm gedruckt. Als Tinte kam Roland SOL INK ESL-BK, ESL-LM, ESL-YE, ESL-MG, ESL-CY oder ESL-LC zum Einsatz. Die Rückseite eines Laptop-PC-Bildschirms wurde vom Gerät entfernt, gereinigt und mit der bedruckten Folie Luftblasen-frei bei Raumtemperatur beklebt. Die Folie kann nun einerseits mit einer Handwalze festgestrichen werden - insbesondere wenn eine glatte Fläche beklebt wurde - oder zur Nachbehandlung in einem Vakuumiergerät bei ca. 80 °C aufgepresst werden. Bei der Vakuumbehandlung passt sich die Folie der Form der Rückwand an. An den Randkanten wurde die Folie über die Rückwand hinaus nach innen gebogen und ca. 0,5 cm auf der Innenseite der Rückwand angebracht, sodass die gesamte Fläche der Folie angelegt wird. Die Rückwand wird letztendlich wieder am Laptop-PC befestigt.

### Beispiel 2: Linsenraster

Lenticularfolien verfügen über eng aneinandergereihte gleichartige Linsenstreifen (Sammellinse). Bilder (Bildvorlagen) werden am PC streifenweise zerlegt und ergebnisabhängig mit speziellen Programmen zusammengeführt (interlaced); je nach Wirkung 2 bis 32 Teilbilder/Streifen unter einem Linsenstreifen.

### 2.1 Lenticularfolie:

Vor Beginn der Gestaltung und der Auswahl der Bilder muss die Entscheidung über die Wahl der Lenticularfolie (auch Linsenrasterfolie bezeichnet) fallen. Je nach Einsatzgebiet des Endproduktes wird hier zwischen 62, 75 und 100-lpi-Folien gewählt. Der Unterschied zwischen den Folien sind die Anzahl der Linsen auf einem Inch und damit in Zusammenhang die Stärke der Folie. Als Beispiel, die am häufigsten eingesetzte Folie in 75 lpi hat eine Dicke von 485 µm.

Jeder Lenticular-Effekt muss in der Druckvorstufe digital erzeugt werden. Bei der Erstellung eines Flip-Effektes müssen zumindest zwei Bildquellen vorhanden sein, um diesen erzeugen zu können. Bei 3D-Effekten sind eine Vielzahl von Bildquellen notwendig um die Tiefenwirkung der Dimension darstellen zu können.

Die Auswahl des Bildmaterials und die Art des Effekts und deren Bearbeitung sind der Grundbaustein für eine erfolgreiche Produktion.

Texte, vor allem in kleineren Schriftgrößen, sind aufgrund der im Substrat eingebetteten Linsen schwer lesbar, besonders wenn diese Texte ein Teil einer Animation oder eines Flips werden sollen.

Um Animationen, Bewegungen oder auch 3D-Effekte auf Photoshop-Bildern kreieren zu können, sind dafür verschiedene Layers (Ebenen) notwendig. Ein in sich zusammengefasstes Bild kann dafür nicht verwendet werden.

Die fertiggestellten Einzelbilder werden mit Hilfe spezieller Software, je nach Anwendungsart, gerendert. Anschließend ist eine Belichtung mit sehr hoher Auflösung und einem eigenen Rasterungsverfahren direkt auf die Druckplatte notwendig.

Der Druck erfolgt unter Einhaltung größter Präzision (Genauigkeiten von 0,01 mm) direkt auf die Lenticularfolie.

Präzise Passerhaltigkeit ist die Voraussetzung für einen guten Lenticular-Effekt, gedruckt im 4-Farbprozess (+ Deckweiß im Anschluss), je nach Anwendungsart des Produktes.

### 2.2. Lenticular-Effekte

Die 3D-Technik besteht im Wesentlichen darin, ein reales Objekt aus 20 unterschiedlichen Perspektiven zu fotografieren. Hierbei darf die Kamera die horizontale Achse nicht verlassen. Der genau zu berechnende Kamera-Abstand ist bestimmt durch die Entfernung, der Größe, der Tiefe des Objektes, der Brennweite des Kameraobjektives, der Linsenrastergröße und dem Abbildungsmaßstab.

Die Bilder werden eingescannt und digital in hauchdünne Streifen zerlegt (interlaced) . Anschließend wird der Ausdruck auf die Linsenrasterfolie laminiert, die ein durchsichtiges Raster von vertikal verlaufenden Zylinderlinsen aufweist. Dabei überdeckt eine Linse zusammengehörige Bildstreifen. Je nach Blickwinkel fokussiert die Linsenplatte den Blick nun auf einen anderen Bildstreifen. Beim räumlichen Bild sorgt der Abstand zwischen den Augen dafür, dass jedes Auge das Bild für "seinen" Blickwinkel bekommt, und so der räumliche Eindruck entsteht. Je mehr Ausgangsfotos verwendet werden, desto schmaler muss das Raster sein, desto weniger springt dann aber auch das Bild beim Betrachten. Übliche Werte der Linsenrasterfolie liegen zwischen 10-160 lpi (lines per inch). Abbildungsgrößen von 2,40 m sind inzwischen keine Seltenheit mehr.

Durch Verwendung unterschiedlicher Bilder können 3D-, Animation-, Morphing-, Zoom- oder Flip-Effekte erzeugt werden. Dabei können die Linsenstreifen auch horizontal angebracht sein. Beim Kippen des Bildes nach oben oder unten wechselt das Motiv.

Das Linsenrastersystem ist das einzige Bildsystem, das ermöglicht, mehrere unterschiedliche Bilder in einem einzigen Print darzustellen.

Beim "Flip" werden je nach Betrachtungswinkel das ein oder andere Bild dargestellt. Dieser Effekt ist auch als "Wackelbild" bekannt. Dabei kommt es auf den Linsenverlauf an, ob der Wechsel beim Kippen des Bildes um die senkrechte Achse (senkrechter Linsenverlauf) oder um die waagrechte Achse (waagrechter Linsenverlauf) stattfindet.

Bei großformatigen Flips wechselt das Bild im Vorbeigehen. In der Regel werden zwei bis drei unterschiedliche Bilder verwendet und die Bildphasen wechseln sich zueinander ab. Das komplette Bild ändert sich.

In der Datenvorbereitung werden die Bilder in eine spezielle Software geladen. Diese "schneidet" die Bilder in Streifen und verschachtelt sie wieder zu einem. Hierbei wird jeweils ein Streifen von Bild A und einer von Bild B unter eine Linse gesetzt. Im Allgemeinen wird bei Kleinformaten ein horizontaler Linsenverlauf empfohlen.

Weiter Möglichkeiten bestehen darin, Teile des Bildes erscheinen bzw. verschwinden zu lassen.

Beim Zoom entsteht der Eindruck, dass sich das Bild auf den Betrachter zubewegt und erscheint je nach Blickwinkel größer oder kleiner. Es ändert jedoch nicht die Form, sondern nähert und entfernt sich.

Die gängige Anzahl von Phasen beläuft sich auf 6 bis 12. Je mehr Phasen eingebettet werden, desto weicher wird der Wechsel.

Durch das Ein- bzw. Auszoomen bekommt das Bild eine räumliche Wirkung. Jedes Bild zeigt das gleiche Objekt oder, wie in unserem Beispiel, einen Schriftzug. Allein die Größe stellt den Unterschied zwischen den Bildern dar. Dabei ist darauf zu achten, dass keine Sprünge entstehen, d.h. die Bilder müssen proportional vergrößert werden.

Beim Morphing verwandelt sich ein Bild in ein anderes Bild. Bei der Auswahl der Bilder ist es ratsam darauf zu achten, dass zentrale Teile des einen Bildes horizontal und vertikal auf gleicher Position mit den zentralen Teilen des anderen Bildes liegen. In den meisten Fällen müssen deshalb die Bilder in einer anderen Software (z.B. Photoshop) vorher bearbeitet bzw. auf Position gebracht werden. Dies erfordert natürlich einen größeren Zeitaufwand, aber der Morphing-Effekt ist fließender.

Anschließend werden die Bilder in eine spezielle Morphing Software importiert. Diese wandelt unter Anweisung des Benutzers Bild A in Bild B um und exportiert die fertige Verwandlung in einen Player, aus dem die Einzelbilder entnommen werden müssen. Diese werden dann mit Hilfe der Lenticular-Software wiederum in Streifen geschnitten und ineinander verschachtelt.

In der Regel werden 8 bis 24 Phasen benutzt.

Animation beruht auf dem Grundsatz, dass Veränderung in aufeinander folgenden Einzelbildern im Gehirn als Bewegung interpretiert werden.

Auf diesem Prinzip bauen auch die Animationsbilder in der Lenticulartechnik auf. In einem Bild werden mehrere Phasen (Frames) untergebracht und durch die verschiedenen Betrachtungswinkel dargestellt. So entsteht der Eindruck einer Bewegung.

In einer gedruckten Animation können 3 bis 32 Phasen wiedergegeben werden. Hierfür wird z.B. ein kurzer Filmausschnitt benutzt. Die Einzelbilder werden aus dem Film exportiert und in die Lenticular-Software geladen. Dort werden alle Bilder zu einem einzelnen Lenticularbild zusammengefügt.

### 2.3. Technik

### Horizontale Linse

Durch eine horizontale Linsenführung bewirkt man eine Bildtrennung. Das bedeutet, dass beide Augen gleichzeitig dasselbe Bild wahrnehmen, getrennt von den anderen Bildern, die sich auf dem Druck befinden.

Eine horizontale Linsenführung ist daher für Animationen, Morphing- und Wechselbilder besonders gut geeignet.

Möglich sind 2-32 Phasen (folienbedingt). Je mehr Phasen eingebracht werden, desto "weicher" werden die Bewegungen einer Animation. Bringt man aber nur zwei Phasen ein, hat man ein Wechselbild (z.B. Vorher-, Nachhereffekt).

### Vertikale Linse

Durch eine vertikale Linsenführung bewirkt man eine Bildvereinigung. Das bedeutet, dass beide Augen gleichzeitig unterschiedliche Bilder sehen können. Bringt man also stereoskopische Parallaxen in dieses Bild ein, so können die beiden Augen gleichzeitig unterschiedliche Perspektiven betrachten, und im Gehirn entsteht ein räumlicher Eindruck.

Möglich sind 4 bis 32 Phasen (folienbedingt). Je mehr Phasen eingebracht werden, desto fließender werden die Übergänge zwischen den einzelnen Perspektiven. Bringt man aber nur wenige Phasen ein, erhält man ein "Wackelbild".

### Anforderungen

Für die Produktion von Lenticular-Produkten ist es wichtig, eine Druckmaschine zu benutzen, die in Sachen Passgenauigkeit keine Wünsche offen lässt. Ein großer Vorteil ist hierbei die Möglichkeit der Diagonalverstellung der Druckplatten, da dies eine optimale Passereinstellung erlaubt.

Die Druckmaschine sollte außerdem über mindestens fünf Druckwerke, ein Lackwerk und UV-Ausstattung verfügen, um Folien direkt zu bedrucken. Natürlich ist auch der Druck auf andere Bedruckstoffe möglich. Hierbei muss die Folie jedoch nachträglich auf den Bedruckstoff kaschiert werden, worin sich aber wiederum die Gefahr von Passerdifferenzen verbirgt.

Wenn der Druck nur minimale Differenzen im Passer aufweist, potenziert sich dieser Fehler über die gesamte Breite einer Folie und zerstört den gewünschten Effekt. Für den Drucker werden außerhalb des Endformats durchgehende Linien aufgebracht, die als Passerkontrolle dienen.

Die Zylinderabwicklung, die von Druckwerk zu Druckwerk differiert, ist im Gegensatz zu normalen Druckprodukten von großer Bedeutung.

Selbst die Ausdehnung des Bedruckstoffes durch die Erwärmung beim Druck kann Einfluss auf das Endergebnis haben. Eine Druckverschiebung um wenige Pixel ergibt eine Farbverschiebung im Bild.

Aufgrund dieser Tatsache wird immer versucht, die Linsenrasterfolie parallel zur Zylinderachse zu bedrucken. Der Linsenverlauf ist vergleichbar mit der Laufrichtung vom Papier.

Auch das Lagerungsklima, welches zu einer Dehnung oder Schrumpfung des Materials führen kann, hat Einfluss auf das spätere Endprodukt.

Allgemein lässt sich festhalten, dass im kleinen Format wesentlich präziser gearbeitet werden kann, als bei großformatigen Produkten.

| Folie | 30 lpi | 40 lpi | 60 lpi | 75 lpi |
|---|---|---|---|---|
| Technische Informationen | | | | |
| Öffnungswinkeln in ° | 49 | 25 | 26 | 49 |
| Stärke in mm | 1,39 | 2,08 | 1,20 | 0,46 |
| ca. Gewicht in g/m² | 1600 | 2600 | 1466 | 466 |
| Betrachtungsabstand in m | 0,3-5 | 0,3-5 | 0,3-3 | 0,3-1 |
| Anwendungen | | | | |
| 3D | x | x + | x + | x |
| Flip/Animation/Morph/Zoom | x | x + | x + | x |

Die Folien bestehen aus thermoplastischem Kunststoff und einem Feld von Zylinderlinsen, die durch ihre optische Eigenschaften zwei oder mehr Bilder, die ineinander verschachtelt unter der Folie liegen, in unterschiedliche Richtung abbilden. Durch diese Technik ist es möglich, zwei oder mehr Bildinformationen räumlich getrennt aus einem Bild heraus darzustellen. Dabei ist die Darstellung der einzelnen Bilder vom Betrachtungswinkel abhängig.

Lenticularfolien werden nach der Anzahl der Linsen pro Inch (lpi) beschrieben. Gängig sind Folien mit 60 lpi für Bilder bis DIN A4, 40 lpi für Bilder bis 50 cm x 70 cm und 10 lpi für sehr große Formate.

Schon bei der Auswahl des Produktes wird die Folie (Linsenstärke) bestimmt. Damit der Lenticular-Effekt sauber dargestellt werden kann, müssen die Bilder der Folie angepasst werden.

Allerdings gibt es teilweise produktionsbedingte Abweichungen zwischen der lpi-Angabe des Herstellers und der tatsächlichen Anzahl der Linsen, die nicht zu vermeiden sind. Dafür sind ebenfalls Lager- und Verarbeitungsbedingungen ein Faktor.

Eine als 60 lpi (60 Linien pro 2,54 cm) spezifizierte Folie kann also in der Praxis z.B. 60,41 lpi oder auch 59,8 lpi haben, was als "normale" Abweichung bezeichnet wird. Dies kann gravierende Auswirkungen auf das Druckresultat haben und muss unter allen Umständen berücksichtigt werden.

Außer den beschriebenen Abweichungen innerhalb einer Charge differiert der lpi-Wert zu anderen Chargen. Jede Folie ist an einer Seite, die auch als Anlage benutzt wird, mit dem vom Hersteller angegebenen lpi-Wert und Produktionsnummer gekennzeichnet.

Die Beklebung der Lencticularfolien auf Bildschirmeinheiten und deren Rückwand (Monitorrückwänden) - Notebooks, iPods, Handys, PDAs, Navigationssysteme - erfolgt durch Besprühen eines handelsüblichen Klebers, der die Kunststoffteile so verbindet, dass ein nachträgliches Entfernen ohne Rückstände gegeben ist. Sollte die Höhe/Stärke der aufzubringenden Lenticularfolie nicht störend sein, kann auch eine beidseitig klebende Folie als Klebemittel verwendet werden.

### Beispiel 3: Chip

An, in oder zwischen den Folien kann ein Chip oder Minichipsatzes angebracht werden, z.B. durch Verklebung, zwecks Diebstahlschutz. Dieser Diebstahlschutz ergibt die Möglichkeit per Satellit, die angebrachte Folie und deren integrierten Chip zu orten und somit das Auffinden des Gerätes mit dem aufgebrachten Diebstahlschutz zu gewährleisten. Dieser Chipsatz kann mit oder ohne eigener Stromversorgung arbeiten und eine klaglose Funktion ermöglichen. Der Einsatz dieses Diebstahlschutzes kann auf allen Geräten verwendet werden, deren Schutz und Sicherheit vor Diebstahl gewährleistet werden soll.

## Patentansprüche

1. Bildschirmeinheit, an dessen Gehäuse-Rückwand eine bedruckbare Folie mit einer Dicke zwischen 10 µm und 500 µm flächendeckend, wobei in mindestens einer Dimension der Aufsicht der Rückwand die Folie jeweils bei einem Abstand von weniger als 1 cm zu den beiden Rändern der Rückwand in dieser Dimension reichend, befestigt ist.

2. Bildschirmeinheit nach Anspruch 1, **dadurch gekennzeichnet, dass** die Folie in beiden Dimensionen der Aufsicht der Rückwand jeweils bei einem Abstand von weniger als 1 cm zu den vier Rändern der Rückwand befestigt ist.

3. Bildschirmeinheit nach Anspruch 1 oder 2, **dadurch gekennzeichnet, dass** die Folie bedruckt ist, vorzugsweise mit einem Werbemuster oder Werbetext.

4. Bildschirmeinheit nach einem der Ansprüche 1 bis 3, **dadurch gekennzeichnet, dass** die Folie eine Dicke bis zu 250 µm, vorzugsweise zwischen 30 µm und 200 µm, vorzugsweise zwischen 40 µm und 150 µm, am meisten bevorzugt zwischen 50 µm und 100 µm, aufweist.

5. Bildschirmeinheit nach einem der Ansprüche 1 bis 4, **dadurch gekennzeichnet, dass** die Bildschirmeinheit ein Flachbildschirm ist.

6. Bildschirmeinheit nach einem der Ansprüche 1 bis 5, **dadurch gekennzeichnet, dass** die Bildschirmeinheit ein Laptop- oder Notebook-Bildschirm ist.

7. Bildschirmeinheit nach einem der Ansprüche 1 bis 6, **dadurch gekennzeichnet, dass** die Folie eine Kunststofffolie ist.

8. Bildschirmeinheit nach Anspruch 7, **dadurch gekennzeichnet, dass** die Folie eine Folie auf Vinyl-Basis, vorzugsweise auf PVC-Basis, ist.

9. Bildschirmeinheit nach einem der Ansprüche 1 bis 8, **dadurch gekennzeichnet, dass** die Folie 70 %, bevorzugt mehr als 80 %, besonders bevorzugt mehr als 90 % der Aufsichtsfläche der Rückwand abdeckt.

10. Bildschirmeinheit nach einem der Ansprüche 1 bis 9, **dadurch gekennzeichnet, dass** die Folie mehr als 95 %, bevorzugt mehr als 99 %, der Aufsichtsfläche der Rückwand abdeckt.

11. Bildschirmeinheit nach einem der Ansprüche 1 bis 10, **dadurch gekennzeichnet, dass** die Folie durch eine Schutzfolie, vorzugsweise eine durchsichtige UV-Schutzfolie, überdeckt ist.

12. Bildschirmeinheit nach einem der Ansprüche 1 bis 11, **dadurch gekennzeichnet, dass** die Folie ohne Beabstandung von Rand zu Rand reicht.

13. Bildschirmeinheit nach einem der Ansprüche 1 bis 12, **dadurch gekennzeichnet, dass** die bedruckbare Folie oder gegebenenfalls die Schutzfolie die (Rund-)Kanten der Rückwand abdeckt und **dadurch** zumindest teilweise gebogen ist.

14. Bildschirmeinheit nach einem der Ansprüche 1 bis 13, **dadurch gekennzeichnet, dass** wenigstens ein Rand der bedruckbaren Folie oder die Schutzfolie in einer Nut oder Fuge des Gehäuses der Bildschirmeinheit angebracht ist, vorzugsweise in einer Fuge zwischen der abnehmbaren Rückwand und dem übrigen Gehäuse der Bildschirmeinheit.

15. Bildschirmeinheit nach einem der Ansprüche 1 bis 14, **dadurch gekennzeichnet, dass** die Folie nicht weniger als einen 1 cm breiten Streifen, bevorzugt nicht weniger als einen 0,5 cm breiten Streifen, vom Rand der Rückwand frei lässt.

16. Bildschirmeinheit nach einem der Ansprüche 1 bis 15, **dadurch gekennzeichnet, dass** die bedruckbare Folie eine durchsichtige Folie ist.

17. Bildschirmeinheit nach einem der Ansprüche 1 bis 16, **dadurch gekennzeichnet, dass** zwischen der Rückwand und der bedruckbaren Folie eine nicht-durchsichtige Folie und gegebenenfalls ein oder mehrere durchsichtige Folien befestigt sind.

18. Bildschirmeinheit nach einem der Ansprüche 1 bis 17, **dadurch gekennzeichnet, dass** die bedruckbare Folie mit der Rückwand klebend verbunden ist.

19. Bildschirmeinheit nach einem der Ansprüche 1 bis 18, **dadurch gekennzeichnet, dass** die bedruckbare Folie eine Linsenrasterfolie ist oder von einer Linsenrasterfolie zumindest teilweise überdeckt ist.

20. Bildschirmeinheit nach Anspruch 19, **dadurch gekennzeichnet, dass** die Linsenrasterfolie eine Linsenanzahl von 5 bis 180 lpi, vorzugsweise von 15 bis 120 lpi, am meisten bevorzugt von 25 bis 90 lpi aufweist.

21. Bildschirmeinheit nach Anspruch 19 oder 20, **dadurch gekennzeichnet, dass** das Linsenraster in einer Dimension vorliegt, vorzugsweise vertikal oder horizontal.

22. Bildschirmeinheit nach einem der Ansprüche 19 bis 21, **dadurch gekennzeichnet, dass** die Linsenrasterfolie ein Raster von Zylinderlinsen aufweist.

23. Bildschirmeinheit nach einem der Ansprüche 1 bis 22, **dadurch gekennzeichnet, dass** in oder an einer der Folien ein Mikrochip befestigt ist.

24. Verfahren zur Befestigung einer bedruckbaren Folie an der Rückwand eines Gehäuses einer Bildschirmeinheit, **dadurch gekennzeichnet, dass** die bedruckbare Folie eine Dicke zwischen 10 µm und 500 µm aufweist und flächendeckend befestigt wird, wobei in mindestens einer Dimension der Aufsicht der Rückwand die Folie jeweils bei einem Abstand von weniger als 1 cm zu den beiden Rändern der Rückwand in dieser Dimension klebend befestigt wird.

25. Verfahren nach Anspruch 24, **dadurch gekennzeichnet, dass** die Folie eine Dicke zwischen 10 µm und 500 µm, vorzugsweise zwischen 30 µm und 150 µm, am meisten bevorzugt zwischen 50 µm und 100 µm, aufweist.

26. Verfahren nach Anspruch 24 oder 25, **dadurch gekennzeichnet, dass** über die bedruckbare Folie eine Schutzfolie gespannt wird.

27. Verfahren nach einem der Ansprüche 24 bis 26, **dadurch gekennzeichnet, dass** die Rückwand des Gehäuses der Bildschirmeinheit abgenommen wird und die bedruckbare Folie oder die Schutzfolie über die Kanten der Rückwand so weitgehend vorgesehen und angebracht wird, so dass beim Wiederbefestigen der Rückwand an der Bildschirmeinheit sich zumindest teilweise die Enden der bedruckbaren Folie oder der Schutzfolie in der Fuge zwischen der Rückwand und dem übrigen Gehäuse befinden.

28. Verwendung einer Folie zur Aufbringung eines Werbemusters oder Werbetextes an eine Rückwand einer Bildschirmeinheit, wobei die Folie wie in einem der Ansprüche 1, 2, 4, 7 bis 16 und 18 bis 23 und die Bildschirmeinheit wie in einem der Ansprüche 1, 3, 5, 6 und 17 definiert ist.

29. Verwendung eines Verfahrens nach einem der Ansprüche 24 bis 27 zur Anbringung eines Werbemusters oder Werbetextes auf der Folie an eine Rückwand einer Bildschirmeinheit.
